(19) Europäisches Patentamt
European Patent Office
Office européen des brevets

(11) Publication number: **0 233 642**
**A2**

(12) # EUROPEAN PATENT APPLICATION

(21) Application number: 87102300.8

(22) Date of filing: 18.02.87

(51) Int. Cl.³: C 07 B 35/02
C 11 C 3/12

(30) Priority: 18.02.86 US 830636

(43) Date of publication of application: 26.08.87 Bulletin 87/35

(84) Designated Contracting States: AT BE CH DE ES FR GB IT LI NL SE

(71) Applicant: CAMET, INC.
1200 Winrock Road
Hiram, Ohio(US)

(72) Inventor: Cornelison, Richard C.
6587 Route 82 Hiram
2223 Delaware Drive Cleveland Hts. Ohio(US)

(72) Inventor: Alcorn, William R.
6587 Route 82 Hiram
2223 Delaware Drive Cleveland Hts. Ohio(US)

(74) Representative: Baillie, Iain Cameron
c/o Ladas & Parry Isartorplatz 5
D-8000 München 2(DE)

(54) **Process for hydrogenation of organic compounds.**

(57) A process is disclosed for hydrogenating an organic compound comprising

contacting said compound with hydrogen in the presence of a monolith-supported hydrogenation catalyst at a sufficient temperature and pressure and for an effective period of time to provide a hydrogenated product,

said catalyst comprising

a metal substrate,

a washcoat adhered to said substrate, said washcoat comprising a material selected from the group consisting of alumina, titania, silica, magnesia, a zeolite, or a mixture of two or more thereof, and

a catalytic metal or compound of said catalytic metal impregnated in and/or deposited on said washcoat, said catalytic metal being selected from the group consisting of palladium, platinum, nickel, copper, silver or mixtures of two or more of said catalytic metals.

EP 0 233 642 A2

# PROCESS FOR HYDROGENATION OF ORGANIC COMPOUNDS

## Technical Field

This invention relates to a process for hydrogenating organic compounds and, more particularly, to a process for hydrogenating organic compounds using a monolith-supported catalyst. The invention is applicable to the hydrogenation of a wide variety of organic compounds that are susceptible to hydrogenation, and is particularly suitable for hydrogenating ethylenically unsaturated compounds, such as olefinic compounds and especially the triglycerides present in animal and vegetable fats and oils.

## Background of the Invention

Hydrogenation is the reaction between hydrogen and an organic compound. It may occur as a direct addition of hydrogen to the double bonds of unsaturated molecules resulting in a saturated product. It may also cause a rupture of the bonds of organic compounds, with subsequent reaction of hydrogen with the molecular fragments. Examples of the former, which is sometimes referred to as addition hydrogenation, are the conversion of olefin compounds to paraffinic compounds, the conversion of aromatics to cycloparaffins, and the partial hydrogenation of unsaturated animal or vegetable fats and oils to reduce the degree of unsaturation in such fats and oils. Examples of the latter include the animation of nitroaromatics, the hydrocracking of

petroleum, and the hydrogenolysis of coal to hydrocarbon fuels. While the present invention is suitable for any hydrogenation process, it is particularly suitable for the partial hydrogenation of unsaturated animal and vegetable fats and oils to reduce the degree of unsaturation in such fats and oils.

Animal and vegetable fats and oils consist essentially of triglycerides with smaller proportions of mono- and diglycerides, that is, of esters of the trihydric alcohol glycerol with long chain fatty acids. These triglycerides may be represented by the general formula:

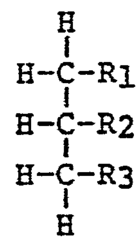

wherein $R_1$, $R_2$ and $R_3$ are the same or different long chain fatty acids. These may range in complexity from acids containing 12 carbon atoms in the chain (that is, $C_{12}$ acids) to those containing 30 atoms (that is, $C_{30}$ acids). Nutritionally, the most important of these acids are those containing 18 carbon atoms and these may contain 3, 2, 1 or 0 double bonds and may be characterized respectively as: Linolenic acid $C_{183}$; Linoleic acid $C_{182}$; Oleic acid $C_{181}$; and Stearic acid $C_{180}$.

It is considered that, of these acids, it is the doubly-unsaturated linoleic acid which is a particularly important component in food for human consumption.

Typical sources of vegetable oil, wherein the preponderant acids are C18 acids, are the soya bean, rape seed, sunflower, safflower and the palm and palm kernel. Examples of edible animal oils which may contain C18 acids are those from such fish as the herring, pilchard, and anchovy and also from beef tallow and pig fat.

In recent years fats and oils of vegetable origin have become increasingly important both as foods in their own right, as the components of manufactured foods and particularly as frying oils.

A disadvantage of these fats and oils, however, is that in the "raw" state they have relatively poor keeping qualities. They readily oxidize and become rancid due to the formation of impurities, such as aldehydes, for example, and it is linolenic acid containing three double bonds which is particularly prone to oxidation.

In order to lengthen the keeping qualities or shelf life of such fats and oils under ordinary conditions, it is desirable to eliminate the trienic forms of acid. This elimination is conveniently done by selectively hydrogenating the trienic form to the dienic or monoenic form.

Most commercial animal and vegetable fat and oil hydrogenations are carried out in large agitated batch reactors using powdered or particulate nickel catalysts which are dispersed in the fat or oil being treated. These catalysts typically have particle sizes in the range of 0.5-20 microns. After completion of the hydrogenation, the catalyst is removed from the product by filtration, usually in plate-and-frame or pressure leaf filters. The catalyst can be re-used a few times

in "clean" fat or oil processes but is normally discarded after fatty acid hydrogenation.

Various hydrogenation processes employing powdered or particulate catalysts dispersed in the fat or oil being treated are disclosed in the patent literature. For example, U.S. Patent 3,856,710 discloses the use of mixed copper and nickel catalyst compositions in the hydrogenation of vegetable oils. U.S. Patent 4,188,333 discloses a process for selectively hydrogenating polyenic compounds in oils using a catalyst comprising nickel supported on a titanium oxide carrier. In both of the processes disclosed in these patents, the catalyst is dispersed in the oil being hydrogenated, then subsequent to hydrogenation, the catalyst is separated from the oil.

In an attempt to overcome the difficulties inherent with using a powdered or particulate catalyst dispersed in oil, it has been proposed to use fixed-bed catalysts for animal and vegetable oil hydrogenations. For example, U.S. Patents 4,385,001; 4,424,162; 4,424,163; 4,479,902; 4,510,091; and 4,510,092 disclose the use of continuous processes for hydrogenating edible oils using fixed bed catalysts. The catalyst disclosed in the '001 patent is cobalt supported on alumina. The '162 patent discloses the use of zerovalent platinum group metals supported on alpha-alumina. The '163 patent discloses the use of zerovalent nickel supported on titania, while the '902 patent discloses the use of platinum or palladium supported on titania. The '091 and '092 patents disclose the use of zerovalent nickel supported on alpha-alumina.

While each of the foregoing processes are meritorious, none have been found to be entirely

satisfactory. A problem with the use of powdered or particulate catalysts dispersed in the fat or oil being treated is that the filtration processes that are currently available are costly and in many instances inefficient. When using precious metals such as platinum and the like, filtration is especially costly because of small losses of metal that are inherent with such filtration processes and cannot be completely avoided. Fixed bed catalysts have thus far not been found to be commercially acceptable primarily because of poor product quality. The poor product quality is believed to be due to the relatively low effectiveness of the relatively large granular or shaped catalyst materials that must be used in such fixed beds. The oil molecules tend to become highly saturated with hydrogen while trapped inside these relatively large catalytic materials.

U.S. Patent 4,163,750 discloses a process for partially hydrogenating animal and vegetable oils. The catalyst used in this process contains one or more of Fe, Co, Ni or the platinum group metals supported on carbon, stainless steel, ceramics or Fe-Cr-Al-Y alloys. The reference indicates that the support can be an extended surface or particulate in form.

Various monolith-supported catalysts are described in the patent literature. U.S. Patents 4,301,039; 4,350,617; and 4,402,871 disclose catalysts (e.g., platinum/$Al_2O_3$ and palladium/$Al_2O_3$) having corrugated metallic foil supports. U.S. Patent 4,300,956 discloses honeycomb catalyst support structures. These structures are useful under various advantageous conditions for treating gaseous substances such as automotive exhaust gases.

U.S. Patent 4,318,888 discloses a monolith-type automotive catalytic converter comprising a wound, corrugated, coated metal foil. The foil is preferably oxidized to cover the surface with integrally grown, densely spaced alumina whiskers and thereafter coated with a gamma alumina material suitable for impregnation with a catalyst material. Platinum, palladium and rhodium are disclosed as being the catalyst materials.

## Summary of the Invention

The present invention contemplates the provision of a process for hydrogenating an organic compound that is susceptible to hydrogenation comprising contacting a mixture of said compound and hydrogen with a monolith-supported hydrogenation catalyst at a sufficient temperature and pressure and for an effective period of time to provide the desired hydrogenated product. The catalyst used in this process comprises: a metal substrate; a washcoat adhered to said substrate, said washcoat comprising a material selected from the group consisting of alumina, titania, silica, magnesia, a zeolite, or a mixture of two or more thereof; and a catalytic metal impregnated in and/or deposited on said washcoat, said catalytic metal being selected from the group consisting of palladium, platinum, nickel, copper, silver or mixtures of two or more of said catalytic metals. This process is particularly suitable for the selective hydrogenation of animal and vegetable fats and oils.

## Brief Description of the Drawings

In the annexed drawings, like references depict like parts and features:

Fig. 1 is a flow sheet depicting the inventive process in a particular form;

Fig. 2 is a cross-sectional view of the monolith-supported catalyst employed in the inventive process depicted in Fig. 1 taken along line 2-2 of Fig. 1; and

Fig. 3 is an enlarged sectional view of the monolith-supported catalyst depicted in Fig. 2 illustrating the layered construction of said catalyst, said layered construction being constituted of a metal substrate, a washcoat adhered to said substrate and a catalytic metal impregnated in and/or deposited on said washcoat.

Description of the Preferred Embodiment

The present invention is suitable for use in hydrogenating any organic compound that is susceptible to hydrogenation. The invention is especially suitable for hydrogenating organic compounds that are liquid at the temperature and pressure at which they are treated. The invention is useful for hydrogenating ethylenically unsaturated compounds such as olefinic compounds and especially the triglycerides present in animal and vegetable fats and oils. Thus while the invention is described in terms of hydrogenating animal and vegetable fats and oils, it is to be understood that the invention is applicable to the hydrogenation of any organic compound that is susceptible to hydrogenation.

The animal and vegetable fats and oils that can be treated in accordance with the invention are sometimes referred to as fats or fatty oils and are made up predominantly of triesters of glycerol with fatty acids. These triesters are commonly called triglycerides.

The terms "fats" and "fatty oils" are often used interchangeably in the art. Fats are solids at

room temperature, while oils are liquid at such temperature. The term "lipid" is often used interchangeably in the art with the term "fat".

Fats and oils are distributed widely in nature. They are derived from vegetable, animal and marine sources and often are by-products in the production of vegetable proteins or fibers and animal and marine proteins. The chemical structures of these fats and oils are very complex owing to the combinations and permutations of fatty acids that can be esterified at the three (enzymatically non-equivalent) hydroxyl groups of glycerol. A triglyceride can be represented by the formula

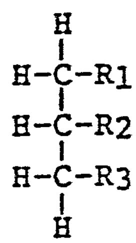

wherein R1, R2 and R3 are independently fatty acid groups of from about 12 to about 30 carbon atoms. Many naturally occurring fats and oils are made up of fatty acids with chain lengths greater than about 12 carbon atoms. The vast majority of vegetable and animal fats are made up of fatty acid molecules of more than about 16 carbon atoms. Marine fats are characterized by their content of longer-chain fatty acids of, for example, up to about 24 carbon atoms. Because the fatty acid portions of the triglycerides make up the larger proportion (e.g., about 90% fatty acids to about 10% glycerol) of the fat and oil molecules, most of the chemical and physical properties result from the effects

of the various fatty acids esterified with glycerol. Examples of some of the fats and oils that can be hydrogenated in accordance with the invention are indicated in the following table.

TABLE

| Fat or Oil | Type |
|---|---|
| Vegetable | |
| babassu | lauric acid |
| castor | hydroxy acid |
| coconut | lauric acid |
| corn | oleic-linoleic acid |
| cottonseed | oleic-linoleic acid |
| linseed | linolenic acid |
| oiticica | conjugated acid |
| olive[a] | oleic-linoleic acid |
| palm | oleic-linoleic acid |
| palm kernel | lauric acid |
| peanut (ground-nut) | oleic-linoleic acid |
| rapeseed | erucic acid (oleic-linoleic acid)[b] |
| safflower | oleic-linoleic acid |
| sesame | oleic-linoleic acid |
| soybean | linoleic-linolenic acid |
| sunflower | oleic-linoleic acid |
| tung | conjugated acid |
| Animal | |
| butter | milk |
| lard | land animal |
| tallow and grease | land animal |
| Marine | |
| whale | marine |
| sperm whale | marine |
| fish (liver) | marine |

[a] Includes olive residue oil at 10% of total.
[b] Low erucic varieties.

Reference is made to the article entitled "Vegetable Oils" in The Encyclopedia of Chemical Technology, Third Edition, Kirk and Othmer, Vol. 23, pages 717-741, and the article entitled "Fats and Fatty Oils" in Vol. 9, pages 795-831 of Kirk and Othmer, Third Edition, for their disclosures of fats and oils that can be treated in accordance with the invention. The disclosures of these articles are incorporated herein by reference.

As indicated above, the hydrogenation catalyst employed in accordance with the invention is constituted of a metal substrate, a washcoat adhered to said substrate, and a catalytic metal impregnated in and/or deposited on said washcoat. The metal substrate can be any suitable metal substrate but is preferably an aluminum coated ferritic stainless steel foil having a thickness of preferably from about 0.0015 inch to about 0.003 inch, more preferably from about 0.002 inch to about 0.0025 inch, and a width of from about 1.5 inch to about 7.5 inch, although smaller and larger thicknesses and narrower and wider widths can be employed as desired. The aluminum-coated foil is preferably first annealed to oxidize the aluminum surface of the foil to form a coating of aluminum oxide thereon. Preferably, the foil is annealed at a temperature of from about 1400°F to about 1600°F.

The foil substrate is next straightened and then corrugated using known procedures such as, for example, passing the foil through opposing rolling gears. The corrugations can be straight, chevron (i.e., zig-zag) or sinuous in shape across the width of the foil strip depending upon the requirements of the ultimate user. The laminations of the chevron-shaped

corrugations can be folded back and forth in accordion style or fan folded style to form, without nesting, "mixed flow cells".

Prior to applying the washcoat, it is preferable to remove any lubricant that may be present on the foil substrate. This may be done by any convenient procedure such as, for example, by heating the foil substrate at a sufficient temperature to vaporize said lubricant, e.g., about 1200°F.

In the washcoating step, a relatively heavy layer of aluminum oxide is coated onto the already existing aluminum oxide surface of the foil substrate. The coating material is preferably in the form of a slurry and contains catalyst carriers, modifying agents to improve the rheology of the system and catalyst promoter. The various components of the slurry may include, therefore, alumina, titania, silica, magnesia, a zeolite, or a mixture of two or more thereof, all suspended in water. Alumina, titania and mixtures of alumina and titania are preferred. Optional ingredients include oxides of hafnium, cerium, titanium, vanadium, or one or more metals from the lanthanum or rare earth metal groups. Suitable suspending agents may also be added to assist in minimizing settling.

The zeolites can be any zeolite that can be adhered to the metal substrate when applied in accordance with the washcoat procedure described herein. These zeolites are preferably crystalline, hydrated, framework aluminosilicates which are based on a three-dimensional network of $AlO_4$ and $SiO_4$ tetrahedra linked to each other by sharing all of the oxygens. These zeolites may be represented by the empirical formula

$$M_{2/n}O \cdot Al_2O_3 \cdot xSiO_2 \cdot yH_2O$$

wherein, M is a cation, x is generally equal to or greater than 2 since $AlO_4$ tetrahedra are joined only to $SiO_4$ tetrahedra, and n is the cation valence. The framework contains channels and interconnected voids which are occupied by the cation, M, and water molecules. The cations may be mobile and exchangeable to varying degrees by other cations. Ammonium and alkylammonium cations may be incorporated in the zeolites, e.g., $NH_4$, $CH_3NH_3$, $(CH_3)_2NH_2$, $(CH_3)_3NH$, and $(CH_3)_4N$. The structural formula of a zeolite can be expressed for the crystallographic unit cell as:

$$M_{x/n}[(AlO_2)_x(SiO_2)_y] \cdot wH_2O$$

wherein M is a cation of valence n, w is the number of water molecules and the ratio y/x usually has values of 1-100 depending upon the structure. The sum (x+y) is the total number of tetrahedra in the unit cell. The complex within the [] represents the framework composition. The zeolites described in the patent literature and published journals are usually designated by letters or other convenient symbols. Exemplary of these materials are Zeolite A (U.S. Patent 2,882,243), Zeolite X (U.S. Patent 2,882,244), Zeolite Y (U.S. Patent 3,130,007), Zeolite ZSM-5 (U.S. Patent 3,702,886), Zeolite ZSM-11 (U.S. Patent 3,709,979), and Zeolite ZSM-12 (U.S. Patent 3,832,449). These patents are incorporated herein by reference.

The washcoat can be applied to the foil substrate by any conventional means, including brushing,

rolling, dipping, electrostatic spraying, ultrasonic spraying, air spraying, etc. Air spraying is preferred.

The washcoat preferably has a dry film thickness of from about 5 to about 50 microns, more preferably from about 15 to about 40 microns. The washcoat is most effective when it is uniformly applied over the flanks, peaks and valleys of the corrugations. After application of the washcoat, the foil substrate containing the washcoat is preferably dried at a temperature in the range of about 250°F to about 350°F and then calcined at a temperature in the range of about 850°F to about 950°F.

The washcoated substrate is preferably quite porous to permit it to sorb solutions of catalyst material quite readily. The catalyst material is applied by impregnating in and/or depositing on the washcoat solutions of compounds of the catalyst metals to near saturation, or incipient wetness, e.g., the point where liquid just begins to run down the surface of a vertically oriented strip of the washcoated substrate. The catalytic metal that is impregnated in and/or deposited on the washcoat is selected from the group consisting of palladium, platinum, nickel, copper, silver and mixtures of two or more of said metals. The compounds of these metals that are dissolved in the solution that is applied to the washcoat can be any water-soluble compound including but not limited to the oxides, hydroxides, inorganic salts (e.g., nitrates, phosphates, halides, carbonates, silicates, aluminates, etc.) and organic salts (e.g., amine salts, organic acid salts such as acetates, formates, butyrates, propionates, benzylates, etc.) of said metals. Water-soluble amine salts of these metals are particularly useful.

Following application of the catalyst materials to the washcoated substrate, the resulting catalytic structure is preferably dried at a temperature in the range of from about 200°F to about 300°F and then calcined at a temperature in the range of about 850°F to about 950°F.

The catalyst is then cut, folded and housed in an appropriate shell using standard procedures to provide the catalyst in a desired form. These catalysts preferably have a catalytic metal density in the range of from about 5 to about 100 gms./ft.$^3$ of catalyst, preferably from about 10 to about 50 gms./ft.$^3$. They preferably contain from about 30 to about 600 cells per square inch. Standard cell sizes that are used in the art and that are useful with this invention include 37, 70, 160, 360, 450 and 600 cells per square inch.

Reference is herein made to the drawings for a description of the inventive process. A pressurized vessel 10 contains a two-part distributor-catalyst assembly 12 constituted of a non-catalytic distributor 14 mounted on top of a catalyst 16. The catalyst 16 is preferably a wound or folded corrugated metal foil structure of the type described above. The corrugations 18 form a honeycomb-like structure containing a desired number of cells 19 per square inch of catalyst 16. Each of these cells represents a vertically elongated channel extending from the top 21 to the bottom 23 of catalyst 16. The fat or oil being treated flows vertically through these channels during operation of the inventive method preferably as a thin film in a trickle-down mode. Preferably, the corrugated walls of the catalyst 16 are wound or folded in a manner to permit at least some of the fat or oil being treated to flow horizontal-

ly from channel to channel as said fat or oil flows vertically downwardly from the top 21 to the bottom 23. This horizontal channel-to-channel flow permits mixing of the fat or oil and provides for improved temperature control of the fat or oil while in contact with the catalyst.

The corrugated walls of the catalyst are constituted of a metal foil substrate 20, a washcoat 22 deposited on each side of the substrate 20, and catalytic metal particles 24 impregnated in and/or deposited on the washcoat 22. The catalyst 16 preferably has a relatively shortened vertical dimension so that the amount of conversion per pass is relatively low. This feature permits a relatively high selectivity of product and enhances the temperature control of the fat or oil being treated as it is advanced through the catalyst. The optimum vertical dimension of the catalyst 16 is dependent upon the particular catalytic metal employed, the catalytic metal density, the pressure and temperature, the specific fat or oil being treated, and the desired degree conversion per pass. The degree of conversion per pass should be limited to control the amount of temperature rise per pass (which preferably should increase by no more than about 10°F to about 20°F per pass) and product quality. The optimum vertical dimension can be determined by a skilled artisan once the foregoing variables are determined. Typically, the vertical dimension is in the range of from about 1.5 inches to about 7.5 inches, but shorter and longer vertical dimensions can be employed.

The distributor 14 preferably has the same shape as the catalyst 16 except that the distributor 14 does not have a washcoat or catalytic metal applied to its surface. Preferably, the cells in the distributor

14 are smaller than the cells 19 in the catalyst 16. Thus, the distributor 14 preferably has more cells per square inch than the catalyst 16. The distributor can contain, for example, from about 100 to about 1000 cells per square inch.

The apparatus also includes conduits 30, 32 and 34 for admitting hydrogen gas into vessel 10. Valve 36, conduits 38 and 40 and spray nozzle 42 are provided for admitting the fat or oil to be treated into vessel 10. Conduits 44, 46 and 48 and pump 50 are provided for recirculating the fat or oil from the bottom of vessel 10 back to the top of vessel 10 through nozzle 42. Conduit 52 and valve 54 are provided for removing product from the bottom of vessel 10. Cooling coil 56 is provided for cooling the fat or oil in the bottom of vessel 10.

In operation, the fat or oil being treated enters the system through valve 36, is advanced through conduits 38 and 40 and into vessel 10 through spray nozzle 42. Hydrogen gas is advanced through conduit 30 to conduits 32 and 34 and into vessel 10. Hydrogen gas advanced through conduit 32 into vessel 10 is mixed with and/or dissolved in the fat or oil being sprayed into vessel 10 through spray nozzle 42. Hydrogen gas advanced through conduit 34 in vessel 10 is mixed with and/or dissolved in the fat or oil passing through catalyst 16 and contained in the bottom of vessel 10. Hydrogen gas also continuously passes through the vertical channels of catalyst 16 and is in contact with the fat or oil being treated in said channels.

The fat or oil and hydrogen accumulates above distributor 14 to form a controlled-depth liquid head 62, passes through distributor 14 to and through catalyst 16 and accumulates in the bottom of vessel 10.

The resistance to flow-through distributor 14 should be sufficient so that in the operation of the process, the controlled-depth liquid head 62 is maintained above distributor 14. The design of such a distributor with such a resistance-to-flow requirement is entirely within the skill of the art. The maintenance of the controlled-depth liquid head 62 above distributor 14 insures a steady and uniform flow of fat or oil through catalyst 16. The fat or oil advances through the vertical channels in catalyst 16 from the top 21 to the bottom 23 of catalyst 16, preferably as a thin film in a trickle-down mode. Preferably, there is also a sufficient amount of cross-channel flow of the fat or oil as discussed above to improve temperature control and thereby avoid the formation of "hot spots" in the catalyst. The fat or oil accumulates at the bottom of vessel 10 and is optionally cooled using cooling coils 56, the need for said cooling being dependent, inter alia, upon the increase temperature, if any, observed per pass through catalyst 16 and the necessity for controlling the temperature of the fat or oil being recirculated. The fat or oil in the bottom of vessel 10 is then either removed as product by opening valve 54 and removing the product through conduit 52, or is recirculated through conduits 44, 46, 48 and 40 to spray nozzle 42 using pump 50. Recirculation can be continued until the desired level of hydrogenation has been achieved.

The inventive process is preferably carried out at a temperature in the range of from about 70°F to about 900°F, more preferably from about 70°F to about 600°F, more preferably from about 120°F to about 400°F. The pressure is preferably in the range of about 1 to

about 50 atmospheres, more preferably from about 1 to about 20 atmospheres, more preferably from about 1 to about 4 atmospheres. The optimum temperature and pressure is dependent, inter alia, on the particular organic compound being hydrogenated and the degree of hydrogenation that is desired. The selection of said temperature and pressure is within the skill of the art.

The inventive process is particularly suitable for partially hydrogenating animal and vegetable fats and oils to reduce the degree of unsaturation in the fatty-acid groups of the glycerides present in such fats and oils. This reduction in unsaturation has two important consequences, one being higher-melting range temperatures for the fats and oils, and the other being enhanced resistance to oxidation and flavor deterioration. The process can be considered as a series of pseudo-first-order reactions represented by

$$Le \xrightarrow[k_{Le}]{+H2} L \xrightarrow[k_{L}]{+H2} O \xrightarrow[k_{O}]{+H2} S$$

where Le=triene (linolenic acid and isomers); L=diene (linoleic acid and isomers); O=monoene (oleic acid and isomers); S=saturate (stearic acid); and $k_{Le}$, $k_L$ and $k_O$ are reaction constants. The dienic, L, and monoenic, O, forms are the most desirable forms for optimum melting and oxidation-resistance characteristics. Partial hydrogenation permits the reaction to stop at the dienic, L, and monoenic, O, forms without proceeding all the way to saturation, S. Thus, in a preferred embodiment of the invention, trienic forms of triglycerides are substantially completely converted to the dienic and monoenic forms.

Variations of the inventive process described above include, inter alia, the use of metal substrates other than alumina coated stainless steel, the use of multiple catalyst/distributor units aligned either horizontally or vertically, the sequencing of reactors to achieve a continuous-staged operation and alternate methods of temperature control.

Reference is made to the following example which is illustrative of the inventive process.

Example

A laboratory-scale apparatus containing the elements illustrated in Fig. 1 is used. The vessel is a one-liter autoclave reactor. The catalyst has the design illustrated in Figs. 2 and 3 and is constituted of an alumina coated stainless steel foil containing an alumina washcoat and palladium at a loading level of 40 grams per cubic foot catalyst after activation. The foil has a thickness of 0.0025 inch. The catalyst contains 160 cells per square inch and has an internal surface area of 579 square feet per cubic foot. The distributor has a similar design to the catalyst but does not have a washcoat or catalytic metal applied to its surface. The distributor contains 360 cells per square inch and has an internal area of 860 square feet per cubic foot. The catalyst and distributor each have a vertical dimension of 1.5 inch, and each has a diameter of 0.75 inch less than the internal diameter of the autoclave reactor. Soybean oil having an iodine value of 130 is recirculated through the distributor and catalyst at a temperature of 212°F and a pressure of 1.5 atmospheres until the iodine value is reduced to 110.

While the invention has been explained in relation to its preferred embodiment, it is to be

understood that various modifications thereof will become apparent to those skilled in the art upon reading the specification. Therefore, it is to be understood that the invention disclosed herein is intended to cover such modifications as fall within the scope of the appended claims.

C L A I M S

1. A process for hydrogenating an organic compound comprising

contacting a mixture of said compound and hydrogen with a monolith-supported hydrogenation catalyst at a sufficient temperature and pressure and for an effective period of time to provide a hydrogenated product,

said catalyst comprising

a metal substrate,

a washcoat adhered to said substrate, said washcoat comprising a material selected from the group consisting of alumina, titania, silica, magnesia, a zeolite, or a mixture of two or more thereof, and

a catalytic metal or compound of said catalytic metal impregnated in and/or deposited on said washcoat, said catalytic metal being selected from the group consisting of palladium, platinum, nickel, copper, silver or mixtures of two or more of said catalytic metals,

said catalyst being in the form of a corrugated structure, the corrugations of said structure defining a plurality of elongated channels.

2. The process of claim 1, wherein said organic compound is a liquid at the temperature and pressure at which said organic compound contacts said catalyst.

3. The process of either of the preceding claims, wherein said organic compound is an olefinic compound, preferably a trienic compound.

4. The process of claim 1, wherein said organic compound is an animal or vegetable oil or fat and preferably comprises at least one triglyceride represented by the formula

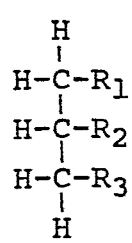

wherein $R_1$, $R_2$ and $R_3$ are independently fatty acid groups of from about 12 to about 30 carbon atoms.

5. The process of any one of the preceding claims, wherein said temperature is in the range of from about 70°F. to about 900°F., preferably 70°F. to about 600°F., more preferably 120°F. to about 400°F.

6. The process of any one of the preceding claims, wherein said pressure is in the range of from about 1 to about 50 atmospheres, preferably from about 1 to about 4 atmospheres.

7. The process of any one of the preceding claims, wherein said metal substrate comprises a metal sheet or foil having a thickness in the range of from about 0.0015 inch to about 0.003 inch.

8. The process of any one of the preceding claims, wherein said washcoat has a dry thickness in the range of from about 5 microns to about 50 microns.

9. The process of any one of the preceding claims, wherein said catalyst has a catalytic metal density of up in the range of from about 5 to about 100 grams per cubic foot of catalyst, preferably from about 10 to about 50 grams per cubic foot of catalyst.

10. The process of any one of the preceding claims, wherein said washcoat comprises alumina or titania.

11. The process of any one of the preceding claims, wherein said catalyst has a honeycomb structure, preferably having from about 30 to about 600 cells per square inch.

12. The process of any one of the preceding claims, with a distributor positioned upstream from said catalyst, said distributor and said catalyst being in the form of corrugated structures, the corrugations of said structures defining a plurality of elongated channels, the average cross-sectional area of the channels in said distributor being smaller than the average cross-sectional area of the channels in said catalyst, said organic compound flowing through said distributor in such a manner as to substantially fill said channels in said distributor, but flowing through said

channels in said catalyst in the form of a thin film.

13. The process of claim 12, wherein said distributor is positioned vertically over said catalyst, said organic compound advancing vertically downwardly through said distributor to said catalyst and filling or substantially filling the channels in said distributor as said organic compound advances through said distributor, said organic compound advancing through the channels in said catalyst as a thin film in a trickle-down mode.

14. A process for hydrogenating an organic compound comprising

contacting a mixture comprising said compound and hydrogen with a monolith-supported hydrogenation catalyst at a sufficient temperature and pressure and for an effective period of time to provide a hydrogenated product,

said catalyst comprising

a metal substrate,

a washcoat adhered to said substrate, said washcoat comprising a material selected from the group consisting of titania, silica, magnesia, a zeolite, or a mixture of two or more thereof, and

a catalytic metal or compound of said catalytic metal impregnated in and/or deposited on said washcoat, said catalytic metal being selected from the group consisting of palladium, platinum, nickel, copper, silver or a mixture of two or more of said catalytic metals.

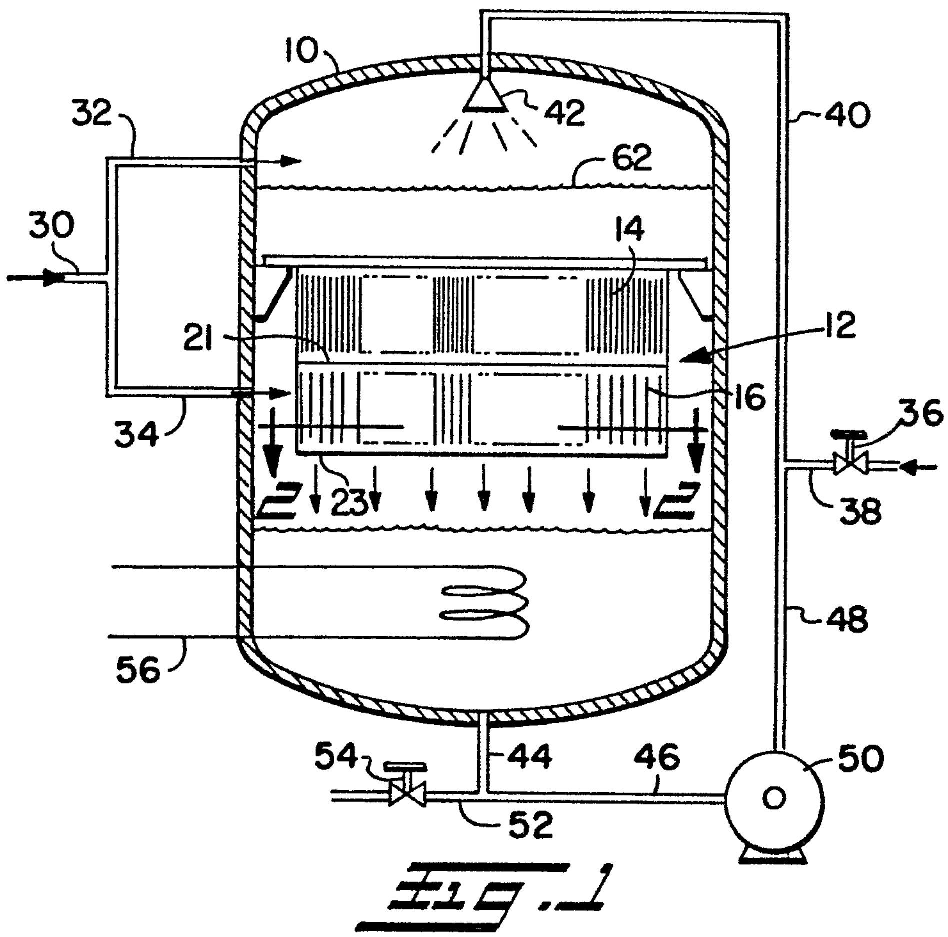


Fig. 1

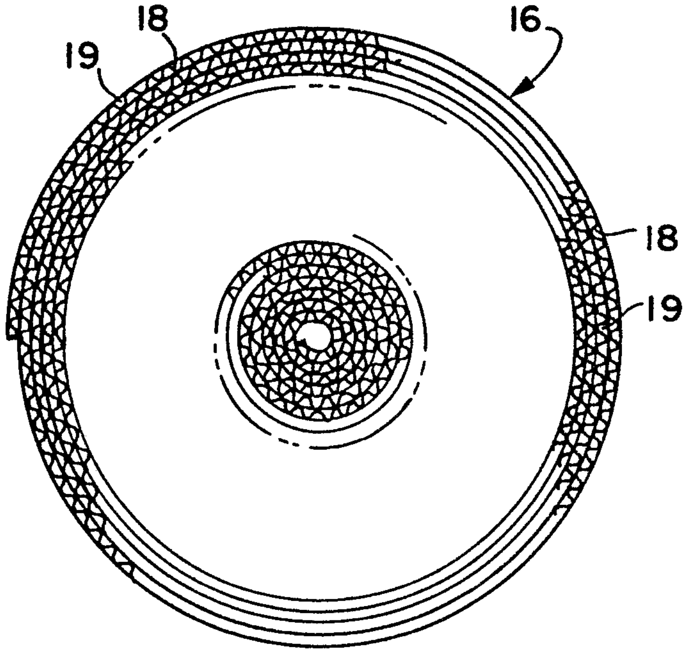


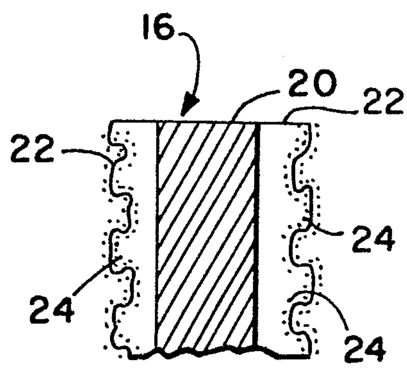


Fig. 3

Fig. 2